Europäisches Patentamt

European Patent Office

Office européen des brevets

(11) Veröffentlichungsnummer: **0 234 231**
**A2**

## (12) EUROPÄISCHE PATENTANMELDUNG

(21) Anmeldenummer: **87100504.7**

(22) Anmeldetag: **16.01.87**

(51) Int. Cl.⁴: **G11B 33/04**

(30) Priorität: **30.01.86 DE 3602695**

(43) Veröffentlichungstag der Anmeldung:
**02.09.87 Patentblatt 87/36**

(84) Benannte Vertragsstaaten:
**DE FR GB IT**

(71) Anmelder: **idn inventions and development of novelties ag**
**Hartbertstrasse 9**
**CH-7002 Chur(CH)**

(72) Erfinder: **Ackeret, Peter**
**Allmendstrasse 18**
**CH-8700 Küsnacht(CH)**

(74) Vertreter: **Dipl.-Ing. H. Marsch Dipl.-Ing. K. Sparing Dipl.-Phys.Dr. W.H. Röhl**
**Patentanwälte**
**Rethelstrasse 123**
**D-4000 Düsseldorf(DE)**

(54) **Behälter für Bild- und Tonaufzeichnungsträger.**

(57) Die Erfindung betrifft einen Behälter für Bild-und Tonaufzeichnungsträger (16), insbesondere für Compactdisks (16), mit einem Gehäuse (10), mindestens einem Transportorgan (12) für jeweils einen Aufzeichnungsträger (16), der relativ zum Gehäuse (10) mittels einer Federanordnung (26) in eine den Aufzeichnungsträger (16) präsentierende Zugriffsposition verlagerbar ist und in dem Gehäuse (10) mittels einer manuell lösbaren Verriegelungsanordnung (18) gegen die Kraft der Federanordnung (26) in einer Aufbewahrungsposition festlegbar ist, und mit Deckelteilen (20), die in der Aufbewahrungsposition der Transportorgane (12) die zugeordnete Gehäuseöffnung verschließen und in der Zugriffsposition in eine Lage bewegt sind, in der Entnahme und Einlegen eines Aufzeichnungsträgers (16) in Fluchtlinie möglich ist, wobei jedem Transportorgan (812) ein Kraftspeicher zugeordnet ist, der das Transportorgan (12) nach einer vorgegebenen Teileinwärtsverlagerung selbsttätig in die Aufbewahrungsposition fördert.

Fig. 2

## Behälter für Bild-und Tonaufzeichnungsträger

Die Erfindung betrifft einen Behälter für Bild- und Tonaufzeichnungsträger, insbesondere für Compactdisks. Ein Behälter, der die im Oberbegriff des Patentanspruchs 1 genannten Merkmale aufweist, ist in der EP-OS 0 139 161 offenbart.

Bei dem bekannten Behälter muß der Benutzer, um das Transportorgan wieder in das Gehäuse zu befördern, zunächst den Deckel wieder in eine Schließlage bringen und dann das Transportorgan einschieben. Wird der Behälter in einem Fahrzeug verwendet, so kann diese relativ komplizierte Bewegung den Fahrzeuglenker vom Verkehrsgeschehen ablenken.-Ferner ist in der EP-OS 0 119 320 eine Behälterbauart beschrieben, bei der die Gehäuseöffnung nur teilweise von einem Deckel verschlossen wird, neben dem noch ein Teil des Transportorgans liegt. Diese Bauart ist ästhetisch unbefriedigend.

Aufgabe der Erfindung ist es, den gattungsgleichen Behälter derart auszubilden, daß er sich mit einem einzigen einfachen Handgriff bedienen läßt, ohne daß der Benutzer durch die Deckelbewegungen behindert wird oder etwa beim Einwärtsfördern des Transportorgans mit dem Deckel kollidieren kann.

Diese Aufgabe wird gemäß der Erfindung durch die im kennzeichnenden Teil des Patentanspruchs 1 angegebenen Merkmale gelöst. Dabei ist das Maß der Teileinwärtsbewegung so bemessen, daß eine Kollision mit dem sich schließenden Deckel ausgeschlossen ist, wobei der Deckel am Gehäuse oder aber auch am Transportorgan angeordnet sein kann und entweder durch Federvorspannung oder durch Zwangsführung in seine Endlage gebracht wird.

Ausführungsbeispiele des Gegenstandes der Erfindung sind in den beigefügten Zeichnungen dargestellt und werden nachstehend im Detail beschrieben.

Fig. 1 stellt perspektivisch einen Behälter für Compactdisks gemäß der Erfindung dar,

Fig. 2 und 3 sind Schnittdarstellungen parallel zur Hauptebene der Disk durch den Behälter nach Fig. 1 in zwei Betriebspositionen,

Fig. 4 ist ein Teilschnitt nach Linie 4-4 in Fig. 2,

Fig. 5 zeigt in Teilfrontansicht einen weiteren Behälter gemäß der Erfindung,

Fig. 6 ist eine zugehörige Schnittdarstellung analog zu Fig. 2,

Fig. 7 ist ein Teilschnitt nach Linie 7-7 der Fig. 6,

Fig. 8 zeigt analog Fig. 2 eine weitere Ausführungsform, und

Fig. 9 zeigt im Teilschnitt die Deckelanordnung dazu.

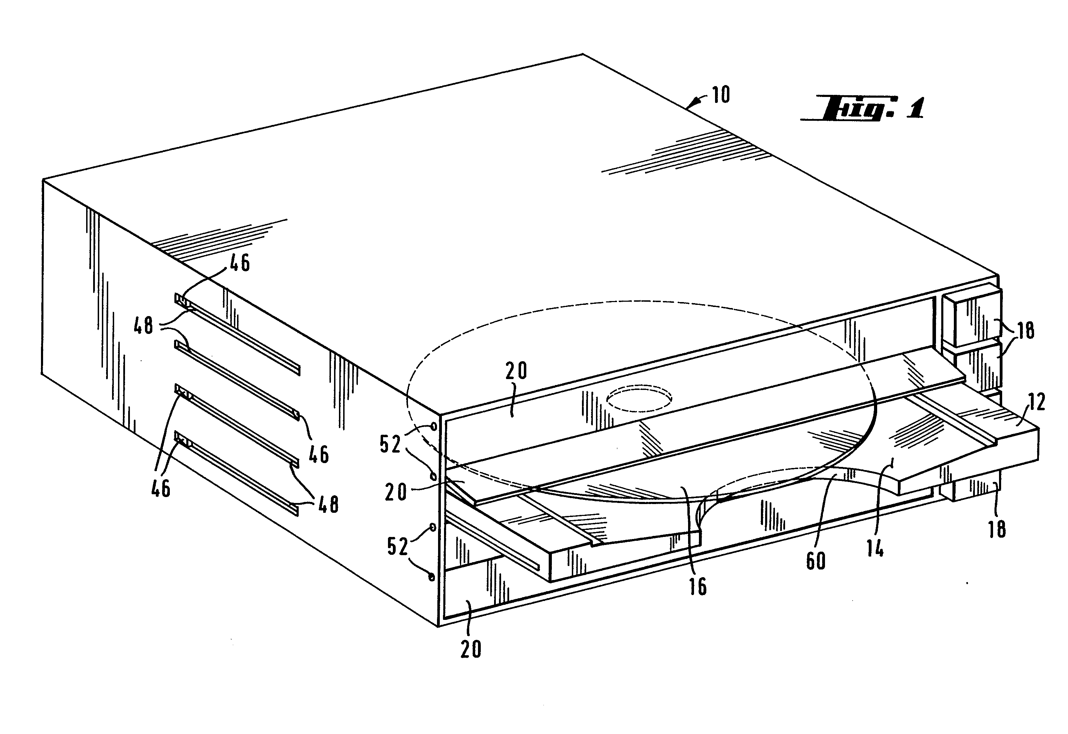

Fig. 1 zeigt einen Behälter für vier Compactdisks, denen je ein Transportorgan zugeordnet ist. In dem Gehäuse 10 sind die Transportorgane 12 hier gleitbeweglich geführt. Jedes Transportorgan umfaßt einen plattenförmigen Halter mit einer konkaven Eintiefung 14, in der die Compactdisk 16 liegt. Seitlich neben jedem Halter ist eine Taste 18 an der Gehäusefront angeordnet, mittels der der zugeordnete Halter für den Ausschub aus dem Gehäuse 10 entriegelbar ist. Bei eingeschobenem Halter wird die zugehörige Gehäuseöffnung durch einen Klappdeckel 20 verschlossen.

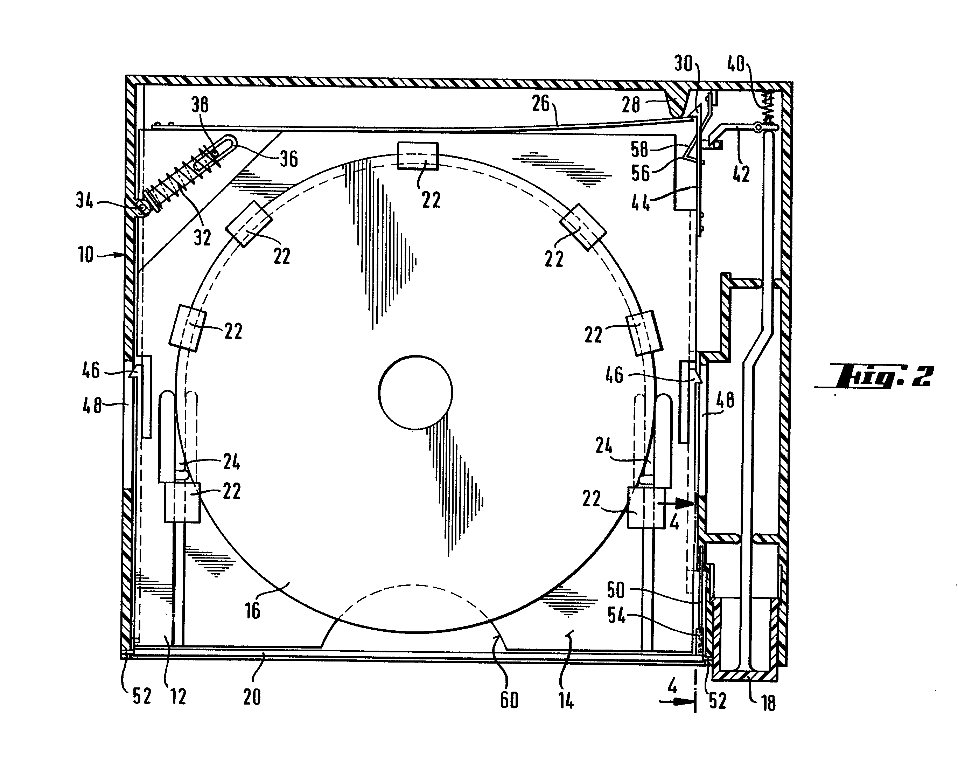

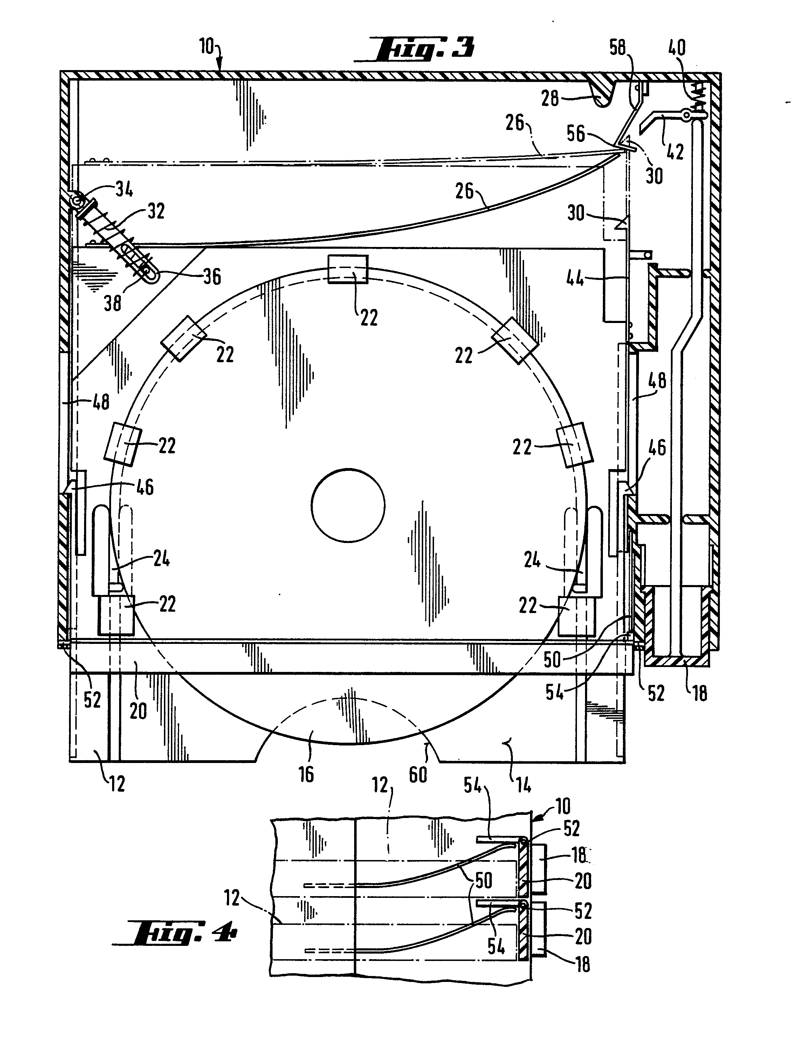

Fig. 2 und 3 zeigen im Schnitt den inneren Aufbau des Behälters. An jeden Halter sind Niederhalter 22 angeformt, die eine eingeschobene Compactdisk übergriefen, und Federarme 24, die beim Einschub der Disk seitlich ausweichen, jedoch dann, wenn der Diskdurchmesser sie passiert hat, eine einwärts gerichtete Kraft auf die Disk ausüben, so daß sie auch dann richtig auf dem Halter plaziert wird, wenn der Benutzer in der Handhabung nachlässig ist.

An der der Behälterfront abgekehrten Endkandte des Halters 12 ist eine Blattfeder 26 befestigt, deren freies Ende sich an einem Gehäusevorsprung 28 abstützen kann. Im Ruhezustand des Halters 12 --in Fig. 2 dargestellt --wird die Blattfeder 26 jedoch im vorgespannten Zustand durch eine Klinke 30 gehalten. Zugleich wirkt auf den Halter die Vorspannung einer Druckfeder 32, die an einer um einen Zapfen 34 schwenkbaren Schiene 36 geführt ist und an einem Widerlager 38 des Halters angreift. Die innere Endlage des Halters wird durch Anschläge bestimmt, hier durch Anlage der Blattfeder 26 am Vorsprung 28.

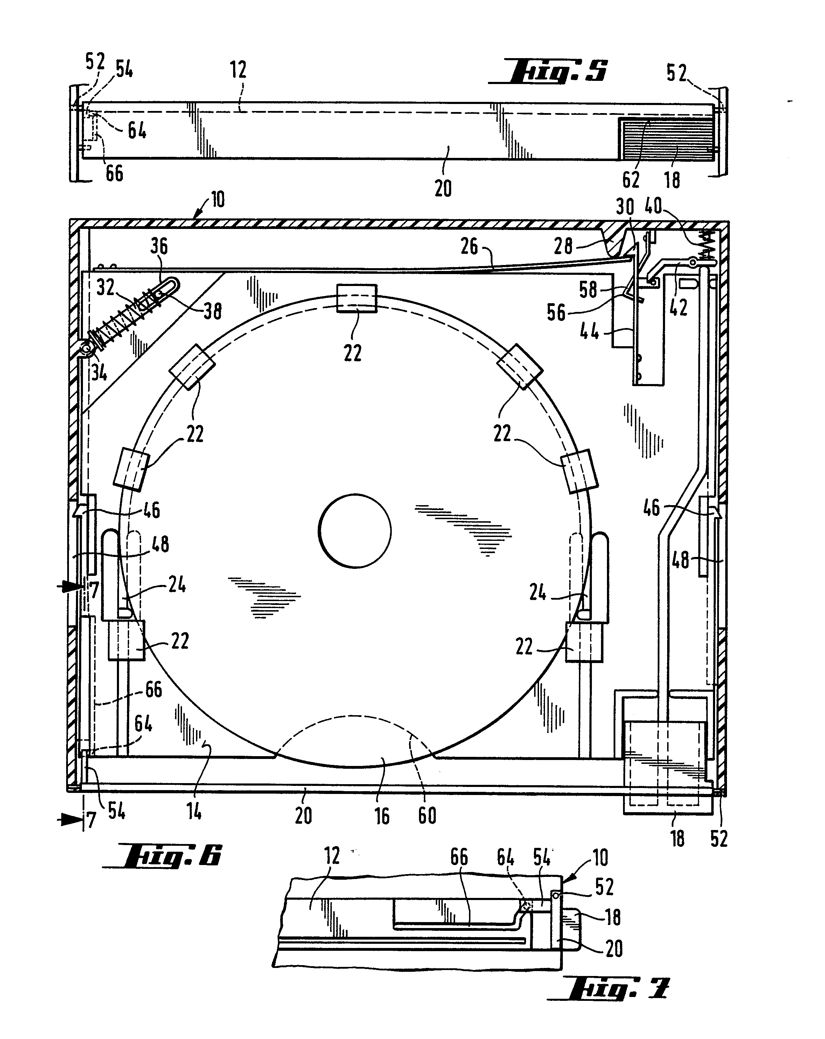

Die Taste 18 läßt sich gegen die Kraft einer Druckfeder 40 eindrücken und verschwenkt dabei einen Steuerhebel 42, mittels dem die an einem Federarm 44 sitzende Klinke 30 ausgelenkt wird, so daß die Blattfeder 26 freigegeben wird. Sie übt auf den Halter 12 eine hinreichend große Kraft aus, daß er aus dem Gehäuse 10 trotz der zunächst ansteigenden Gegenkraft der Druckfeder 32 ausgeschoben wird, bis das Widerlager 38 am Zapfen 34 vorbeigegangen ist, wonach die Wirkungsrichtung der Druckfeder 32 sich umkehrt und nun den Halter 12 vollends in seine äußere Endlage fördert (Fig. 3), die durch Anschläge 46 definiert ist, welche in Gehäuseschlitzen 48 laufen. . Bei der Auswärtsbewegung des Halters 12 wird der Deckel 20, bei 52 im Gehäuse schwenkbar gelagert, gegen die Kraft einer Drahtfeder 50 aufgestoßen, die auf einen an den Deckel 20 angeformten Hebelarm 54 drückt (Fig. 4).

Beim Wiedereinschub des Halters in das Gehäuse 10 wird zunächst die Druckfeder 32 komprimiert. Aber auch die Blattfeder 26 hat bei der Ausschubbewegung mit ihrem freien Ende einen Haken 56 passiert, auf den das freie Federende beim Einschub aufläuft, so daß die Blattfeder beim Einschub gespannt wird, bis sie von der am Halter befestigten Klinke 30 überlaufen wird. Die zugehörige Position ist in Fig. 3 strichpunktiert angedeutet. Bei weiterem Druck auf den Halter weicht der an einem Federarm 58 sitzende Haken 56 aus, so daß die restliche Einwärtsbewegung von der Druckfeder 32 bewirkt werden kann, die ihre Wirkrichtung wiederum umgekehrt hat.

In der ausgeschobenen Position des Halters 12 ermöglicht ein Bodenausschnitt 50 das bequeme zangenartige Erfassen der Compactdisk 16.

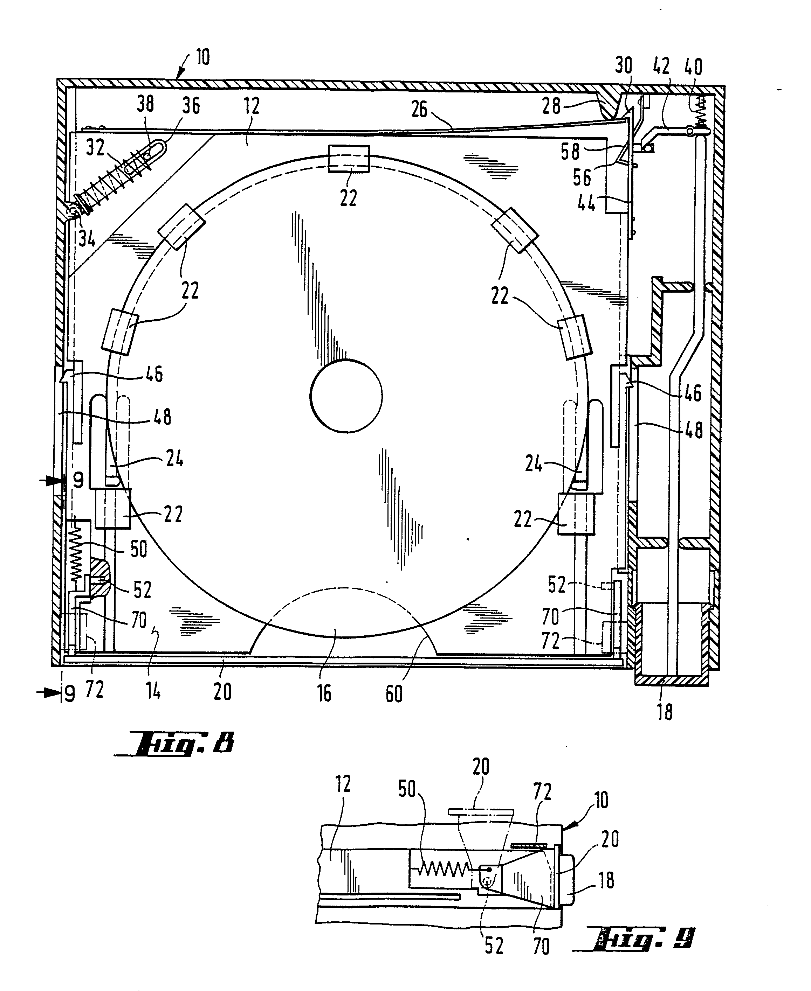

Der Aus- und Einschubmechanismus ist bei der Ausführungsform nach Fig. 5 bis 7 im wesentlichen gleich wie beim Ausführungsbeispiel nach Fig. 1 bis 4 mit der Ausnahme, daß die Taste 18 hier am Halter 12 angeordnet ist. Ein Ausschnitt 62 des Klappdeckels 20 gibt die Betätigungsfläche der Taste frei. Der Klappdeckel 20 ist um die Zapfen 52 schwenkbar im Gehäuse gelagert. Sein Hebelarm 54 greift mit einem Steuernocken 64 in eine an den Halter angeformte Nockenbahn 66, die den in Fig. 7 dargestellten Verlauf hat, und man erkennt, daß der Deckel durch die Auswärtsbewegung des Halters zwangsweise öffnet und beim Einschub ebenso zwangsweise - schließt.

Auch bei der Ausführungsform nach Fig. 8 und 9 kann der Aus- und Einschubmechanismus der ersten Ausführungsform vorgesehen sein. Hier ist der Klappdeckel 20 jedoch nicht am Gehäuse, sondern am Halter 12 um Zapfen 52 schwenkbar gelagert, die nahe dem freien Ende von einwärts gerichteten Fortsätzen 70 des Klappdeckels sitzen. Eine Zugfeder 50 spannt den Klappdeckel in die in Fig. 9 strichpunktiert angedeutete Öffnungsendlage vor. Beim Einschub wird der Deckel durch Auflaufen seiner Fortsätze auf Rippen 72, die an das Gehäuse 10 angeformt sind, wieder in die Schließendlage zurückgeführt.

**Ansprüche**

1. Behälter für Bild- und Tonaufzeichnungsträger, insbesondere für Compactdisks, mit einem Gehäuse, mindestens einem Transportorgan für jeweils einen Aufzeichnungsträger, der relativ zum Gehäuse mittels einer Federanordnung in eine den Aufzeichnungsträger präsentierende Zugriffsposition verlagerbar ist und in dem Gehäuse mittels einer manuell lösbaren Verriegelungsanordnung gegen die Kraft der Federanordnung in einer Aufbewahrungsposition festlegbar ist, und mit Deckelteilen, die in der Aufbewahrungsposition der Transportorgane die zugeordnete Gehäuseöffnung verschließen und in der Zugriffsposition in eine Lage bewegt sind, in der Entnahme und Einlegen eines Aufzeichnungsträgers in Fluchtlinie möglich ist, **dadurch gekennzeichnet,** daß jedem Transportorgan ein Kraftspeicher zugeordnet ist, der das Transportorgan nach einer vorgegebenen Teileinwärtsverlagerung selbsttätig in die Aufbewahrungsposition fördert.

2. Behälter nach Anspruch 1, dadurch gekennzeichnet, daß der Kraftspeicher durch die Teileinwärtsbewegung aufladbar ist.

3. Behälter nach Anspruch 1 oder 2, dadurch gekennzeichnet, daß der Kraftspeicher eine Federanordnung umfaßt.

4. Behälter nach Anspruch 3, dadurch gekennzeichnet, daß die Federanordnung mindestens eine Froschfederanordnung umfaßt.

5. Behälter nach Anspruch 1, dadurch gekennzeichnet, daß der Deckelteil am Gehäuse angeordnet ist.

6. Behälter nach Anspruch 1, dadurch gekennzeichnet, daß der Deckelteil am Transportorgan angeordnet ist.

7. Behälter nach Anspruch 5 oder 6, dadurch gekennzeichnet, daß jedem Deckelteil eine Öffnungs- und eine Schließendlage zugeordnet sind und daß er von einer Feder in eine Endlage vorgespannt ist.

8. Behälter nach Anspruch 7, dadurch gekennzeichnet, daß jeder Deckelteil in seine Schließendlage federvorgespannt ist und durch Auswärtsbewegung des Transportorgans in die Öffnungsendlage bewegbar ist.

9. Behälter nach Anspruch 5 oder 6, dadurch gekennzeichnet, daß jedem Deckelteil eine Öffnungs- und eine Schließendlage zugeordnet sind und daß er durch die Bewegung des Transportorgans zwischen den Endlagen zwangsgeführt ist.

10. Behälter nach Anspruch 5 oder 6, dadurch gekennzeichnet, daß jeder Deckelteil - schwenkbeweglich ist.

11. Behälter nach Anspruch 5 oder 6, dadurch gekennzeichnet, daß eine die Verriegelungsanordnung lösende Taste im Gehäusefrontbereich vorgesehen ist.

12. Behälter nach Anspruch 11, dadurch gekennzeichnet, daß die Taste am Gehäuse angeordnet ist.

13. Behälter nach Anspruch 1, dadurch gekennzeichnet, daß das Transportorgan als im wesentlichen plattenförmiger Schieber ausgebildet ist.

14. Behälter nach Anspruch 13, dadurch gekennzeichnet, daß der Schieber zur Aufnahme einer Compaktdisk wannenartig eingetieft ist.

15. Behälter nach Anspruch 13, gekennzeichnet durch einen frontseitigen Ausschnitt des Schiebers, der einen Flächenbereich der Compaktdisk auf der dem Schieber zugekehrten Seite exponiert.

16. Behälter nach Anspruch 13, gekennzeichnet durch an dem Schieber angeordnete Reibungsbremsorgane für die Compaktdisk.

17. Behälter nach Anspruch 16, dadurch gekennzeichnet, daß die Reibungsbremsorgane federnd auslenkbare Arme umfassen, die sich an die Diskkante anlegen.

18. Behälter nach Ansprüchen 5, 7 und 13, dadurch gekennzeichnet, daß jedes Deckelteil von einer zugeordneten Feder in seine Schließendlage vorgespannt ist und daß der Schieber Seitenwangen aufweist, die nach Lösen der Verriegelung den Deckelteil in die Öffnungsendlage bewegen.

19. Behälter nach Anspruch 13, dadurch gekennzeichnet, daß der Schieber einen zum Einschieben zugänglichen Frontbereich aufweist.

Fig. 1

0 234 231

Fig. 2

**Fig. 3**

**Fig. 4**

**Fig. 5**

52 54 12 52

64 62 18

66 20

**Fig. 6**

10 30 40

36 26 28

32 58

38 56

34 44 42

22

22 22

46 46

48 48

24 24

22 22

66

64 18 52

7 54 14 20 16 60

**Fig. 7**

12 66 64 54 10

52

18

20

**Fig. 8**

**Fig. 9**